# EUROPEAN PATENT SPECIFICATION

(11) **EP 1 818 127 B1**
(45) Date of publication and mention of the grant of the patent: **12.10.2011**
(21) Application number: 07109069.0
(22) Date of filing: 08.07.2005
(51) Int. Cl.: B23D 47/02, B27B 5/16, B27B 5/29, B23D 45/04, B23D 45/06

(54) **Miter lock assembly for miter saws**
Vorichtung zum Festklemmen des Gehrungswinkels einer Gehrungssäge
Dispositif de blocage de l'angle d'onglet pour scie à onglet

(30) Priority: 13.07.2004 US 587621 P
(43) Date of publication of application: 15.08.2007
(62) Divisional of application: 05014831.1
(73) Proprietor: Black & Decker, Inc., Newark, DE 19711 (US)
(72) Inventor: Gehret, Robert, Hampstead, MD 21074 (US); Embree, Paul M., Baltimore, MD 21244 (US); Welsh, Robert P., Phoenix, MD 21131 (US)
(74) Representative: Bell, Ian Stephen

(56) References cited:
- EP-A- 0 633 105
- WO-A-94/23877
- US-A- 3 151 642
- US-A- 3 570 564
- US-A- 5 201 863
- US-A- 5 595 124
- US-A- 5 797 307

## Description

This invention relates generally to a miter lock assembly for a miter saw and more specifically to a miter lock assembly for a combination table/miter saw.

Typical miter saws have a table that is rotatable relative to a base assembly. Typically, miter lock assemblies extend below the workpiece supporting surface of the table. Unlike typical miter saws, the table of a combination table/miter saw is used on both sides thereof. Accordingly, it is an object of the invention to provide a miter lock assembly that can be used when the combination table/miter saw is in miter saw mode, and that does not block the movement of a workpiece along the table when the combination table/miter saw is in table saw mode.

An example of a power tool of the prior art which demonstrates some of the problems set out above is disclosed in US3570564.

According to the present invention, there is provided a power tool comprising the features of claim 1.

Additional features and benefits of the present invention are described, and will be apparent from, the accompanying drawings and the detailed description below.

The accompanying drawings illustrate preferred embodiments of the invention according to the practical application of the principles thereof, and in which:
FIG. 1 illustrates a combination table/miter saw according to a preferred embodiment, whereas FIGS. 1A-1B are side views of the combination table/miter saw in the miter saw and table saw modes, respectively;
FIG. 2 illustrates a miter lock assembly according to a preferred embodiment, whereas FIGS. 2A-2B are top and bottom plan views, respectively;
FIG. 3 is a partial cross-sectional view along line III-III of FIG. 2A; and
FIG. 4 is a partial cross-sectional according to the invention view along line IV-IV of FIG. 2A.

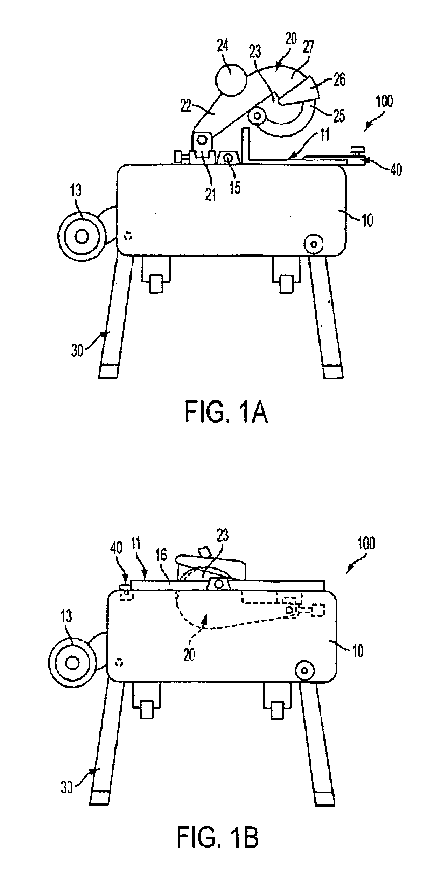

A preferred embodiment is now described with reference to the accompanying figures, wherein like numerals designate like parts. Referring to FIG. 1, a combination table/miter saw 100 includes a base assembly 10, a table assembly 11 supported by base assembly 10, and a saw assembly 20 supported by the table assembly 11. Saw assembly 20 may include a trunnion 21 disposed on the table assembly 11, a pivotable arm 22 pivotably attached to trunnion 21, a motor 24 supported by the arm 22 and driving a blade 23. Arm 22 also supports upper blade guard 27, which covers an upper part of blade 23. Lower blade guard 25 is pivotally attached to upper blade guard 27. An auxiliary blade guard 26 may be pivotably connected to lower blade guard 25.

Preferably, table assembly 11 is pivotally attached to base assembly 10 via joint 15 so that, when the table assembly 11 is in the orientation of FIG. 1A, the saw assembly 20 can act as a miter saw, i.e., saw assembly 20 can be pivoted downwardly towards table assembly 11 to cut a workpiece placed on table assembly 11.

On the other hand, when table assembly 11 is rotated via joint 15 to the orientation of FIG. 1B, the saw 100 acts as a table saw, i.e., saw assembly 20 will be supported by and disposed underneath the table assembly 11. In such orientation, blade 23 extends through the table assembly 11, so that a user can dispose a workpiece on table assembly 11 and push it towards blade 23 for cutting.

Persons skilled in the art will recognize that the preferred embodiment described below can be applicable to non-combined miter saws.

Preferably, base assembly 10 has at least one wheel 13 thereon.

Base assembly 10 may also support four leg assemblies 30. Preferably leg assemblies 30 are pivotally attached to base assembly 10.

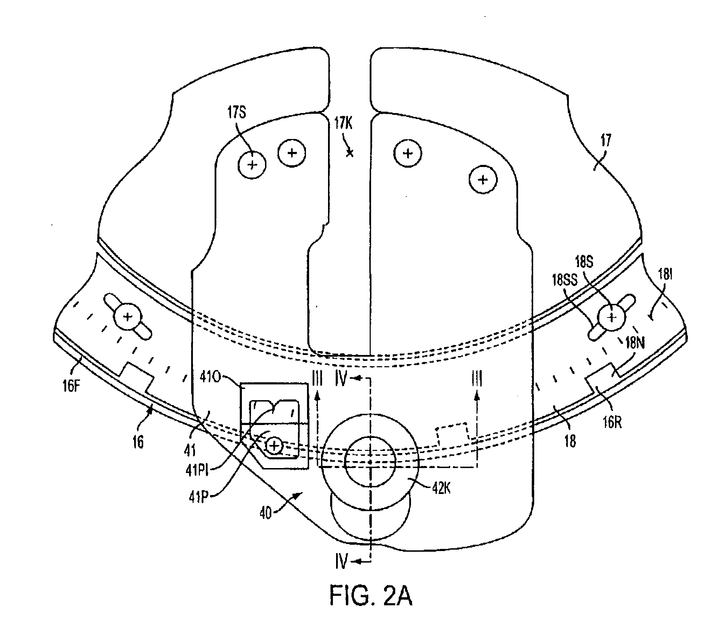

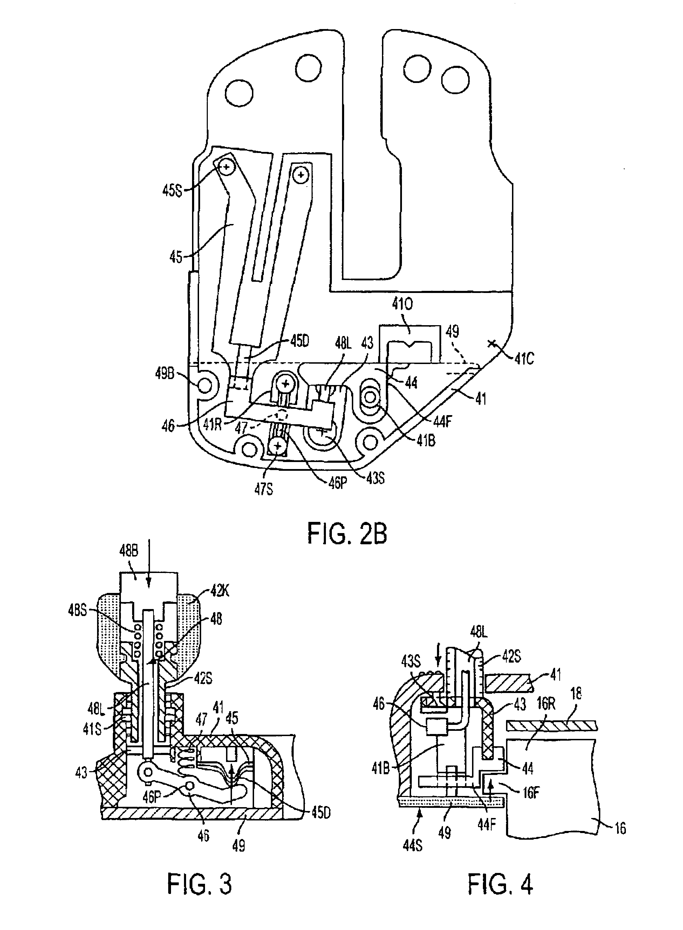

Because the saw 100 can be used as either a table saw or a miter saw, it is preferable to provide a table assembly 11 which can support a workpiece on both sides of table assembly 11. Referring to FIG. 2A, table assembly 11 comprises a fixed table 16 which is connected to joint 15, and a rotatable table 17 rotatably disposed on fixed table 16. Persons skilled in the art will recognize that saw assembly 20 will be preferably disposed on rotatable table 17 so that saw assembly 20 can be mitered when in the miter saw mode. Rotatable table 17 may have a kerf opening 17K to allow blade 23 to extend therethrough.

As shown in FIGS. 1-4, a miter lock assembly 40 is used to fix the rotational position of rotatable table 16 relative to fixed table 17. Miter lock assembly 40 preferably includes a housing 41 attached to rotatable table 17 via screws 17S. Housing 41 may be made of aluminum.

Miter lock assembly 40 may also include a knob 42K overmolded on a screw 42S. As discussed below, it is preferable that screw 42S be substantially hollow. Screw 42S may be made of steel. Screw 42S may threadingly engage a threaded portion 41 S of housing 41. Preferably threaded portion 41 S is a steel insert disposed in housing 41.

Screw 42S may contact a bracket 43. Bracket 43 may be loosely trapped by a screw 43S, which in turn may be threadingly engaged to housing 41. Bracket 43 is substantially L-shaped. When screw 42S is moved downwardly, it contacts bracket 43, forcing bracket 43 to rotate towards a raised portion 16R and/or a flange 16F of fixed table 16.

Bracket 43 may be connected to a contact pad 44. Contact pad 44 may be made of plastic and may have a flange 44F that is captured by a screw 44S threadingly engaging a boss 44S. Flange 44F is slidingly disposed on screw 44S.

According to the invention part of housing 41 is covered with a plate 49 to diminish the amount of dust entering the area with the link 48L, lever 46, bracket 43, etc. Plate 49 may be fixed to housing 41 via screw 44S threadingly engaging boss 41 B and/or other screws threadingly engaging bosses 49B. As shown in FIG. 4, plate 49 extends underneath flange 16F. Such arrangement prevents housing 41 from being pulled off fixed table 16 and/or rotatable table 17.

Referring to FIGS. 1 and 4, plate 49 is the lowest part of miter lock assembly 40. When saw 100 is used in table saw mode, plate 49 and miter lock assembly 40 are not higher than the workpiece supporting surface of table 11, as to not block or impair the motion of a workpiece into blade 23. Plate 49 may be substantially coplanar with or below the workpiece supporting surface of table 11.

Plate 49 may also fix the rotational position of rotatable table 17 relative to fixed table 16. When screw 42S is rotated and moved downwardly, it contacts bracket 43, forcing bracket 43 to move towards flange 16F. Such movements lifts housing 41 relative to fixed table 16, causing plate 49 to contact the underside flange 16F, locking miter lock assembly 40 (and thus rotatable table 17) relative to fixed table 16.

Persons skilled in the art will recognize that screw 42S is moved towards the locking position in a direction substantially perpendicular to fixed table 16 and/or rotatable table 17. Persons skilled in the art will also recognize that plate 49 is lifted towards flange 16F and to the locking position when knob 42K is moved in a direction substantially perpendicular to fixed table 16 and/or rotatable table 17. Such result can also be achieved through other means, where screw 42S is replaced by a non-threaded shaft, etc.

Housing 41 may also support a miter detent assembly. Such detent assembly preferably includes a spring 45. Spring 45 may be made of steel plate. Spring 45 may be fixedly attached to housing 41 via screws 45S.

Spring 45 may have a detent protrusion 45D. Detent protrusion 45D preferably engages notches 18N disposed on a detent plate 18. Detent plate 18 may be disposed on raised portion 16R.

Detent plate 18 may have said notches 18N at predetermined common miter positions, such as 0 degrees, 45 degrees, etc. Detent plate 18 may also have indicia 181 to indicate the rotational position of rotatable table 17 relative to fixed table 16.

Detent plate 18 may have slots 18SS for receiving screws 18S therethrough. With such arrangement, the user can loosen screws 18S, adjust detent plate 18 to accurately show the rotational position of rotatable table 17 relative to fixed table 16, and tighten screws 18S, locking detent plate 18 in place.

Persons skilled in the art will recognize that detent protrusion 45D may be moved between a first position engaging notch 18N and a second position not engaging notch 18N. Spring 45 preferably biases detent protrusion 45D towards the first position.

Detent protrusion 45D may be moved to the second position via a detent override 48. Detent override 48 may include a button 48B connected to a link 48L. Preferably button 48B is disposed within knob 42K.

As mentioned above, screw 42S is preferably hollow. This allows link 48L to extend through screw 42. Link 48L may also extend through bracket 43.

Link 48L may be engaged to a lever 46 at one end. Lever 46 is preferably pivotably connected to housing 41. The other end of lever 46 preferably contacts spring 45 and/or detent protrusion 45D. Lever 46 may have two protrusions 46P along its rotational axis. Protrusions 46P are captured within ribs 41 R of housing 41. Screws 47S preferably capture protrusions 46P (and lever 46). A spring 47 biases lever 46 (and protrusions 46P) towards screws 47S.

Persons skilled in the art may recognize that lever 46 may be constructed by inserting a pin therethrough. The ends of the pin which protrude from lever 46 would constitute protrusions 46P.

With such arrangement, the user can move detent protrusion 45D towards the second position (and allow the rotational movement of rotatable table 17 relative to fixed table 16) by pushing button 48B downwardly, thus moving link 48L downwardly, causing lever 46 to rotate and lift detent protrusion 45D.

A spring 48S may be disposed between button 48B and knob 42K. Persons skilled in the art will recognize that it is preferable to capture button 48B within knob 42K. With such arrangement, spring 48S will bias button 48B away from knob 42 and thus bias link 48L upwardly, allowing detent protrusion 45D to be biased towards the first position and/or engaged to detent notch 18N.

Persons skilled in the art will also recognize that, to move detent protrusion 45D towards the second position, button 48 is moved along a direction substantially perpendicular to rotatable table 17 and/or fixed table 16.

Persons skilled in the art will recognize that housing 41 preferably has a channel 41C that allows housing 41 to clear detent plate 18 and/or raised portion 16R. Persons skilled in the art will recognize that detent protrusion 45D may be within channel 41C.

Housing 41 may have an opening 410 above channel 41C, allowing the user to see detent plate 18 underneath housing 41. A transparent piece 41 P may be attached to housing 41 and extend into opening 410. Piece 41 P may have an indicia 41 Pl. With such arrangement, the user can determine the rotational position of rotatable table 17 relative to fixed table 16 by looking through opening 410 and using indicia 41 Pl, 181 to indicate such position.

Persons skilled in the art will recognize that housing 41 may be shaped around kerf opening 17K to allow blade 23 to extend therethrough.

## Claims

1. A power tool (100) comprising:
a base assembly (10);
a fixed table (16), wherein the fixed table is pivotally attached to the base assembly;
a rotatable table (17) rotatably disposed on the fixed table;
a saw assembly (20) supported by the rotatable table, wherein the fixed table is movable between a first position where the saw assembly is disposed above the fixed table, and a second position where the saw assembly is disposed below the fixed table, and wherein the fixed table has a first plane for supporting a workpiece when in the first position, and a second plane for supporting the workpiece when in the second position;
a miter lock assembly (40) comprising a housing (41) attached to the rotatable table, and a knob (42K) engaging the housing, wherein the location of the rotatable table relative to the fixed table is locked when the knob is moved along a direction substantially perpendicular to at least one of the fixed table and the rotatable table, and wherein the miter lock assembly is coplanar or below the second plane when the fixed table is in the second position; and
**characterised by** a plate (49) arranged to cover part of housing (41), wherein plate (49) extends underneath a flange (16F) formed on fixed table (16).

2. A power tool according to claim 1, wherein the knob is threadingly engaged to the housing.

3. A power tool according to claim 1 or 2, further comprising a contact pad (44) connected to the knob, the contact pad moving towards the fixed table when the knob is moved.

4. A power tool according to any one of the preceding claims, wherein the rotatable table rotates relative to the fixed table about a substantially vertical axis.

5. A power tool according to any one of the preceding claims, wherein the rotatable table has a slot (17K), and the saw assembly has a motor (24), and a blade (23) driven by the motor which extends through the slot.

6. A power tool according to any one of the preceding claims, wherein the fixed table has indicia (181), and the housing has an opening, allowing a person to view the indicia to determine angular position of the rotatable table relative to the fixed table.

## Patentansprüche

1. Ein Elektrowerkzeug (100), das folgende Teile umfasst:
eine Basisbaugruppe (10);
einen feststehenden Tisch (16), wobei der feststehende Tisch schwenkbar an der Basisbaugruppe befestigt ist;
einen drehbaren Tisch (17), der drehbar auf dem feststehenden Tisch befestigt ist;
eine Sägebaugruppe (20), die vom drehbaren Tisch getragen wird, wobei der feststehende Tisch beweglich ist zwischen einer ersten Position, in der die Sägebaugruppe über dem feststehenden Tisch angeordnet ist, und einer zweiten Position, in der die Sägebaugruppe unter dem feststehenden Tisch angeordnet ist, wobei der feststehende Tisch eine erste Ebene zum Tragen eines Werkstücks, wenn er in der ersten Position ist, und eine zweite Ebene zum Tragen des Werkstücks, wenn er in der zweiten Position ist, hat;
eine Gehrungsrastbaugruppe (40) mit einem Gehäuse (41), das am drehbaren Tisch befestigt ist, und einem Knopf (42K), der in das Gehäuse eingreift, wobei der Ort des drehbaren Tisches relativ zum feststehenden Tisch einrastet, wenn der Knopf entlang einer Richtung im Wesentlichen senkrecht zu zumindest einem, dem feststehenden Tisch oder dem drehbaren Tisch, bewegt wird, und wobei die Gehrungsrastbaugruppe auf der gleichen Ebene oder unter der zweiten Ebene ist, wenn der feststehende Tisch in der zweiten Position ist; und
**dadurch gekennzeichnet, dass** eine Platte (49) so angeordnet ist, dass sie einen Teil des Gehäuses (41) abdeckt, wobei sich die Platte (49) unter einem Flansch (16F) erstreckt, der auf dem feststehenden Tisch (16) gebildet wird.

2. Ein Elektrowerkzeug nach Anspruch 1, **dadurch gekennzeichnet, dass** der Knopf mit Gewinde in das Gehäuse eingesetzt ist.

3. Ein Elektrowerkzeug nach Anspruch 1 oder 2, **dadurch gekennzeichnet, dass** es ferner eine mit dem Knopf verbundene Kontaktauflage (44) umfasst, wobei sich die Kontaktauflage zum feststehenden Tisch bewegt, wenn der Knopf bewegt wird.

4. Ein Elektrowerkzeug nach einem beliebigen der vorstehenden Ansprüche, **dadurch gekennzeichnet, dass** sich der drehbare Tisch relativ zum feststehenden Tisch um eine im Wesentlichen senkrechte Achse dreht.

5. Ein Elektrowerkzeug nach einem beliebigen der vorstehenden Ansprüche, **dadurch gekennzeichnet, dass** der drehbare Tisch einen Schlitz (17K) hat und die Sägebaugruppe einen Motor (24) und ein vom Motor angetriebenes Sägeblatt (23) aufweist, das sich durch den Schlitz erstreckt.

6. Ein Elektrowerkzeug nach einem beliebigen der vorstehenden Ansprüche, **dadurch gekennzeichnet, dass** der feststehende Tisch Kennzeichnungen (18I) aufweist und das Gehäuse eine Öffnung hat, damit eine Person die Kennzeichnungen sehen kann, um die Winkelposition des drehbaren Tisches relativ zum feststehenden Tisch zu bestimmen.

## Revendications

1. Outil électrique (100), comprenant :
un assemblage de base (10) ;
une table fixe (16), la table fixe étant fixée à pivotement à l'assemblage de base ;
une table rotative (17) disposée à rotation sur la table fixe ;
un assemblage de scie (20) supporté par la table rotative, la table fixe pouvant être déplacée entre une première position, où l'assemblage de scie est disposé au-dessus de la table fixe, et une seconde position, où l'assemblage scie est disposé en dessous de la table fixe, et la table fixe présentant un premier plan pour supporter une pièce à travailler lorsqu'elle est dans la première position et un second plan pour supporter la pièce à travailler lorsqu'elle est dans la seconde position ;
un assemblage de blocage d'onglets (40) comprenant un
logement (41) fixé à la table rotative et un bouton (42K) s'engageant sur le logement, dans lequel l'emplacement de la table rotative par rapport à la table fixe étant verrouillé lorsque le bouton est déplacé le long d'une direction sensiblement perpendiculaire à au moins une table parmi la table fixe et la table rotative et l'assemblage de blocage d'onglets étantcoplanaire avec le second plan ou situé en dessous de celui-ci lorsque la table fixe est dans la seconde position ; et
**caractérisé par** une plaque (49) disposée de sorte à couvrir une partie du logement (41), la plaque (49) s'étendant en dessous d'une bride (16F) formée sur la table fixe (16).

2. Outil électrique selon la revendication 1, dans lequel le bouton est engagé par vissage avec le logement.

3. Outil électrique selon la revendication 1 ou 2, comprenant en outre un patin de contact (44) raccordé au bouton, le patin de contact se déplaçant vers la table fixe lorsque le bouton est déplacé.

4. Outil électrique selon l'une quelconque des revendications précédentes, dans lequel la table rotative tourne par rapport à la table fixe autour d'un axe sensiblement vertical.

5. Outil électrique selon l'une quelconque des revendications précédentes, dans lequel la table rotative présente une fente (17K) et l'assemblage de scie dispose d'un moteur (24) et d'une lame (23) entraînée par le moteur et qui s'étend à travers la fente.

6. Outil électrique selon l'une quelconque des revendications précédentes, dans lequel la table fixe présente une graduation (181) et le logement présente une ouverture permettant à une personne de visualiser la graduation pour déterminer la position angulaire de la table rotative par rapport à la table fixe.
